# EUROPÄISCHE PATENTSCHRIFT

(11) **EP 0 554 733 B1**
(45) Veröffentlichungstag und Bekanntmachung des Hinweises auf die Patenterteilung: **18.12.1996**
(21) Anmeldenummer: 93101016.9
(22) Anmeldetag: 22.01.1993
(51) Int. Cl.: B21C 47/26

(54) **Anlage zum kontrollierten Abkühlen von Draht aus der Walzhitze**
Apparatus for controlled cooling of wire at rolling temperature
Dispositif pour le refroidissement contrôlé d'un fil à température de laminage

(30) Priorität: 04.02.1992 DE 4203067
(43) Veröffentlichungstag der Anmeldung: 11.08.1993
(73) Patentinhaber: SMS SCHLOEMANN-SIEMAG AKTIENGESELLSCHAFT, D-40237 Düsseldorf (DE)
(72) Erfinder: Grotepass, Johann, W-4030 Ratingen (DE)
(74) Vertreter: Müller, Gerd, Dipl.-Ing.

(56) Entgegenhaltungen:
- EP-A- 0 058 324
- DE-A- 1 508 443
- FR-A- 2 459 085
- GB-A- 2 062 692
- US-A- 3 103 237

## Beschreibung

Die Erfindung betrifft eine Anlage zum kontrollierten Abkühlen von Draht aus der Walzhitze zusammenwirkender Anlagenteile bzw. Arbeitsstationen, umfassend einen Windungsleger, eine anschließende Kühlstrecke mit wenigstens einer Kühlzone und eine nachgeordnete Bundbildestation mit anschließender entsprechend dem Oberbegriff des Anspruchs 1 wie z.B. aus EP-A-58324 bekannt.

Durch kontrolliertes Abkühlen von Draht aus der Walzhitze wird für die jeweiligen Materialqualitäten und die gewünschten Eigenschaften des Walzgutes, insbesondere entsprechend der Weiterverarbeitung, zum Beispiel durch Ziehen, bzw. für eine spezielle Verwendung, zum Beispiel als Beton-Draht, ein Optimum an Walzgutqualität erreicht.

Durch das Stelmor-Verfahren sind bereits qualitative Möglichkeiten zum kontrollierten Abkühlen von Walzgut bzw. Draht aus der Walzhitze bekannt. Dabei durchläuft der fertiggewalzte Draht zunächst eine Wasserkühlstrecke mit Kühl- und Ausgleichszonen. Innerhalb der Kühlzonen wird das Walzgut auf qualitätsabhängige Temperatur vorgekühlt. Sodann wird der Draht mit Hilfe eines Windungslegers in Windungen ausgefächert und auf eine als Kühlstrecke ausgebildete Transporteinrichtung aufgegeben. Die Windungen fallen dabei anfangs mit einer Temperatur von beispielsweise 800^{o} Celsius an und müssen bis zur Bundablage kontrolliert abgekühlt werden. Die hierbei anzuwendende Kühlcharakteristik richtet sich weitgehend nach der Materialqualität sowie den gewünschten Eigenschaften des Endproduktes. Solche Kühlcharakteristiken umfassen beispielsweise a) eine Abkühlung an der Luft unter allmählicher Wärmeabgabe an die Umgebung durch natürliche Strahlung und Konvektion; oder b) beschleunigte, erzwungene Abkühlung mittels Gebläseluft; oder c) extrem rasche und intensive Abkühlung durch Abschrecken mittels Wasser; oder d) verzögerte Abkühlung durch Transport entlang einer verlängerten Kühlzone, fallweise auch bei verringerter Transportgeschwindigkeit; oder e) stark verzögerte Abkühlung beim Durchlauf durch eine allseitig isolierte Transporteinrichtung, wobei fallweise noch die Abdeckplatten heizbar ausgebildet sind; bzw. f) Abdeckung der in der Bundbildestation gebildeten Bunde mit Isolierhauben zur Erzielung eines möglichst weitgehend verzögerten Abkühlungsprozesses.

Mit einer Standard-Anlage zum kontrollierten Abkühlen von Draht aus der Walzhitze können nicht alle auf Drahtstraßen gewalzten Qualitäten mit einer wenn auch in sich variablen Kühlcharakteristik in optimaler Weise abgekühlt werden.

Der Erfindung liegt daher die Aufgabe zurunde, ausgehend von einer Standard-Anlage zum kontrollierten Abkühlen von Draht aus der Walzhitze entsprechend einer durchschnittlichen Materialqualität diese Anlage dahingehend weiter auszugestalten, daß sie fallweise nach Maßgabe spezieller Anforderungen an unterschiedliche Kühlcharakteristiken für die unterschiedlichsten Materialqualitäten mit jeweils sparsamen Mitteln angepaßt bzw. umgerüstet werden kann.

Die Lösung gelingt mit der Erfindung bei einer Anlage zum kontrollierten Abkühlen von Draht aus der Walzhitze der eingangs genannten Art durch die Merkmale des kennzeichnenden Teils des Anspruchs 1.

Mit der Erfindung wird vorteilhaft erreicht, daß der Investitions-Aufwand einer Anlage zum kontrollierten Abkühlen von Draht aus der Walzhitze immer nur so groß ist, wie dieser nach Maßgabe der Anforderungen bezüglich einer vorgegebenen Materialqualität sowie der gewünschten Walzdrahteigenschaften jeweils erforderlich ist, wobei eine materialkonforme, optimale Abkühlcharakteristik erreicht wird.

Die Erfindung sieht vor, daß zur beschleunigten Abkühlung des Drahtes eine vorgegebene Anzahl von Ventilatoren unterhalb der Kühlstrecke angeordnet ist, welche die beim Transport ausgefächerten Drahtwindungen mit Kühlluft kontrolliert abkühlen;
daß eine Kühlstrecke für eine extrem rasche und intensive Abkühlung des Drahtes mit einer Wasserkühlung ausgestattet ist;
daß die Kühlstrecke zur verzögerten Abkühlung des Drahtes mit wenigstens einer zusätzlich anbaubaren Kühlzone verlängerbar ausgelegt ist;
daß die Transporteinrichtung zwischen Windungsleger und Bundbildestation zur stark verzögerten Abkühlung des Drahtes mit isolierten Böden, Seitenteilen sowie Abdeckplatten ausgerüstet ist;
daß die Abdeckplatten zur Erzielung eines bestimmten Draht-Gefüges durch extrem verzögerte Abkühlung mit Radiatoren heizbar ausgebildet sind;
daß der Transporteinrichtung zum Abtransport der Drahtbunde für eine weitergehende Verzögerung bei der Abkühlung der Bunde beim Abtransport der Drahtbunde auf einer Kreisbahn mitlaufende Isolierhauben zur wärmeisolierenden Abdeckung der Bunde zugeordnet sind.

Die Erfindung wird in rein schematischen Zeichnungen in Form von jeweils einem Stammbaum jeder Anlagenvariante gezeigt, wobei aus den Zeichnungen weitere Einzelheiten der Erfindung entnehmbar sind.

Es zeigen:
- Fig. 1: eine Standardanlage für minimale Anforderungen,
- Fig. 2: eine Anlagenvariante für beschleunigte Abkühlung,
- Fig. 3: eine Anlagenvariante für verzögerte Abkühlung,
- Fig. 4: eine Anlagenvariante für langsame Abkühlung,
- Fig. 5: eine Anlage für maximale Anforderungen an unterschiedliche Kühlcharakteristiken.

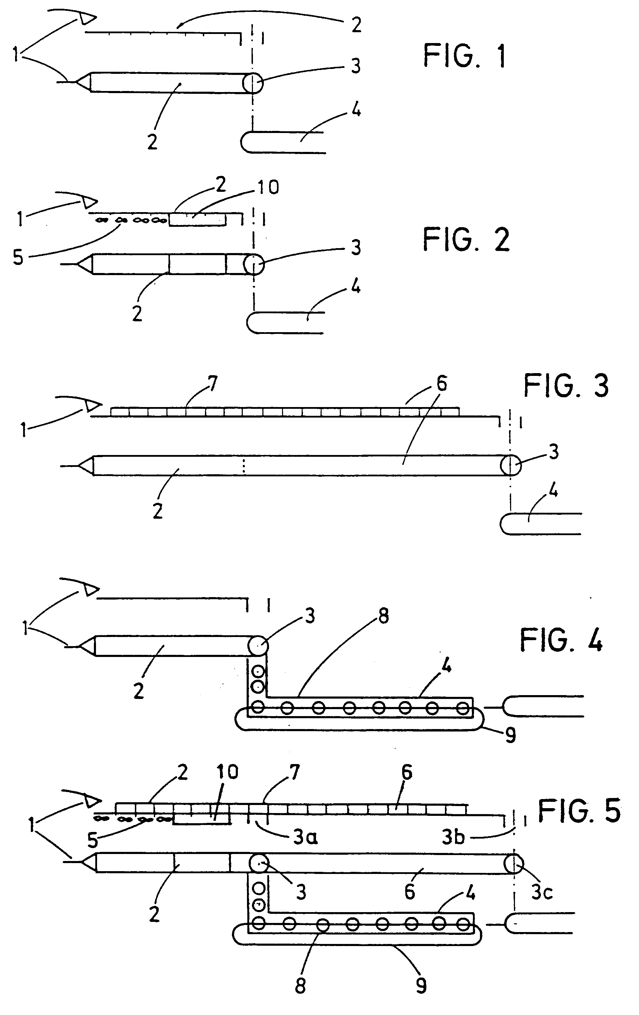

Die in den Figuren 1 bis 5 gezeigten Anlagenstammbäume liegen jeweils in der oberen Darstellung in schematisierter Seitenansicht und in der unteren Darstellung in schematisierter Draufsicht vor.

Die Standardanlage für minimale Anforderungen weist eine Folge zusammenwirkender Anlagenteile bzw. Arbeitsstationen auf, umfassend einen Windungsleger (1), eine anschließende Kühlstrecke (2) mit wenigstens einer Kühlzone und nachgeordneter Bundbildestation (3) mit anschließender Einrichtung (4) zum Abtransport der Drahtbunde. Die Kühlstrecke (2) ist zugleich als Transporteinrichtung ausgelegt, auf welcher die vom Windungsleger (1) ausgefächerten Drahtwindungen zur Bundbildestation (3) gefördert werden. Während des Transportes gibt der Draht durch natürliche Strahlung und Konvektion vergleichsweise langsam Wärme ab und erreicht noch mit relativ hoher Temperatur die Bundbildestation (3), worin aus den einzelnen Drahtwindungen Bunde gebildet und mit der Transporteinrichtung (4) zu einem Stapelraum abgefördert werden. Dabei beansprucht die Abkühlung des Drahtes und der Drahtbunde, wenn keine erzwungene Abkühlung vorgesehen ist, einen verhältnismäßig langen Zeitraum.

Die in der Figur 2 beispielhaft gezeigte Ausbaustufe der Anlage weist zur beschleunigten Abkühlung des Drahtes zusätzlich unterhalb der Kühlstrecke (2) eine Anzahl von Ventilatoren (5) auf. Der in Windungen ausgefächerte Draht wird auf dem Transport zwischen dem Windungsleger (1) und der Bundbildestation (3) mit Gebläseluft kontrolliert abgekühlt. Sowohl die Menge und Geschwindigkeit der Luft, als auch die Transportgeschwindigkeit des Walzgutes sind dabei einstellbare Betriebsparameter. Durch deren Abstimmung ist die Kühlcharakteristik in Grenzen veränderbar und beispielsweise an die Drahtdicke anpaßbar. Um eine extrem rasche und intensive Abkühlung des Drahtes zu verwirklichen, kann anstelle der Ventilatoren oder zusätzlich die Kühlstrecke (2) mit einer Wasserkühlung (10) ausgestattet sein.

In der Figur 3 ist eine Anlage für verzögerte Abkühlung dargestellt. Bei dieser ist die Kühlstrecke (2) mit wenigstens einer zusätzlich anbaubaren Kühlzone (6) verlängert. Die Figur 3 zeigt zugleich noch eine weitere Variante, wobei die aus den beiden Zonen (2) und (6) bestehende verlängerte Kühlstrecke, die zugleich die Transporteinrichtung zwischen Windungsleger (1) und Bundbildestation (3) darstellt, für eine fallweise stark verzögerte Abkühlung des Drahtes mit isolierten Böden, Seitenteilen und Abdeckplatten (7) ausgerüstet ist. Dabei können wahlweise die Abdeckplatten (7) zur Erzielung eines bestimmten Gefüges durch extrem verzögerte Abkühlung des Walzgutes heizbar ausgebildet sein.

Figur 4 zeigt eine weitere Variante der Anlage, bei welcher der zum Abtransport der Drahtbunde vorgesehenen Transporteinrichtung (4) für eine weitergehende Verzögerung bei der Abkühlung der Bunde nach Verlassen der Bundbildestation (3) auf einer Kreisbahn (9) mitlaufende Isolierhauben (8) zur isolierenden Abdeckung der Bunde zugeordnet sind.

Während die in den Figuren 1 bis 4 dargestellten Anlagenvarianten jeweils nur für eine spezielle Abkühlcharakteristik mit entsprechenden Zusatzaggregaten und/oder Ausbaustufen ausgelegt sind, zeigt Figur 5 eine Anlage, die zur flexiblen Anpassung an unterschiedliche und jeweils maximale Anforderungen materialkonformer Abkühlcharakteristiken unterschiedlicher Drahtprodukte mit einer Kombination der vorgenannten Ausbaustufen ausgebildet ist und insgesamt folgende Merkmale aufweist:
a) Eine erste Kühlzone (2) mit Ventilatoren (5) und/oder einer Wasserkühlzone (10) zur langsamen oder wahlweise forcierten Abkühlung, gefolgt von einer daran anschließenden weiteren Kühlzone (6) zur Durchführung einer verzögerten Abkühlung. Diesen beiden Kühlzonen (2, 6), die zugleich als Transporteinrichtungen ausgebildet sind, sind Isoliermittel in Form von isolierten Böden, Seitenteilen und Abdeckplatten (7) zugeordnet, die nach Bedarf auf- bzw. zugeklappt werden können, und zwar zur wahlweisen Einstellung einer weiteren Verzögerung des Abkühlungsvorganges beim Walzgut. Entsprechend einer wählbaren Vielzahl von Anpassungsmöglickeiten ist am Ende der Kühlstrecke (2) ein erster Fallschacht (3a) für eine erste Bundbildestation (3) angeordnet. Damit aber auch die aufgefächerten Drahtwindungen fallweise über die zweite verlängerte Kühlzone (6) transportiert werden können, ist an deren Ende ein zweiter Fallschacht (3b) für eine Bundbildestation (3c) vorgesehen. Der ersten Bundbildestation (3) unter dem Fallschacht (3a) ist eine Einrichtung (4) zum Abtransport der Bunde zugeordnet. Für eine weitergehende Verzögerung bei der Abkühlung dieser Bunde nach Verlassen der Bundbildestation (3) befinden sich auf einer Kreisbahn (9) mitlaufend geführte Isolierhauben (8) zur Abdeckung der Bunde während mindestens eines Teiles ihres Abtransportes.

Mit dieser Anlage gemäß Figur 5 lassen sich bei erhöhtem Investitionsbedarf, jedoch ohne Zeitverlust durch Umrüstungen und ohne Einschränkung bezüglich der Materialqualitäten praktisch alle Produktqualitäten mit gewünschten Eigenschaften in einer einzigen Anlage durch kontrollierte Abkühlung herstellen. Dadurch wird ein hohes Maß an Wirtschaftlichkeit erreicht, weil die Anlage auch bei vergleichsweise kleinen Losgrößen infolge hoher Flexibilität beim kontrollierten Abkühlen des Walzgutes aus der Walzhitze ein Höchstmaß von Anpassungsmöglichkeiten materialkonformer Abkühlcharakteristiken aufweist.

## Patentansprüche

1. Anlage zum kontrollierten Abkühlen von Draht aus der Walzhitze mit einer Folge zusammenwirkender Anlagenteile bzw. Arbeitsstationen, umfassend einen Windungsleger (1) mit einer anschließenden Kühlstrecke (2) mit wenigstens einer Kühlzone und nachgeordneter Bundbildestation (3) mit anschließender Einrichtung (4) zum Abtransport der Drahtbunde, wobei eines oder mehrere der an der Drahtkühlung beteiligten Anlagenteile bzw. Arbeitsstationen (2 - 10) zur wahlweisen Anpassung an unterschiedliche Abkühlcharakteristiken werksseitig in Modulbauweise zur Angliederung von Zusatzaggregaten und/oder Ausbaustufen modifizierbar ausgelegt sind, **dadurch gekennzeichnet**, daß sie für maximale Anforderungen materialkonformer Abkühlcharakteristiken unterschiedlicher Drahtprodukte mit einer Kombination von Ausbaustufen ausgebildet ist, die eine Kombination folgender Merkmale aufweist:
a) in einer ersten Ausbaustufe ist zur beschleunigten Abkühlung des Drahtes unterhalb der Kühlstrecke (2) eine Anzahl von Ventilatoren (5) angeordnet;
b) in einer zweiten Ausbaustufe ist zur extrem raschen und intensiven Abkühlung des Drahtes die Kühlstrecke (2) mit einer Wasserkühlzone (10) ergänzt;
c) in einer dritten Ausbaustufe ist die Kühlstrecke (2) zur verzögerten Abkühlung des Drahtes mit wenigstens einer zusätzlich anbaubaren Kühlzone (6) ausgelegt;
d) in einer vierten Ausbaustufe ist die Transporteinrichtung (2, 6) zwischen Windungsleger (1) und Bundbildestation (3) zur stark verzögerten Abkühlung des Drahtes mit isolierten Böden, Seitenteilen und Abdeckplatten (7) ausgerüstet;
e) in einer fünften Ausbaustufe sind die Abdeckplatten (7) zur Erzielung eines vorgesehenen Draht-Gefüges durch extrem verzögerte Abkühlung mit Radiatoren heizbar ausgebildet;
f) in einer sechsten Ausbaustufe sind der zum Abtransport der Drahtbunde vorgesehenen Transporteinrichtung (4) für eine weitergehende Verzögerung bei der Abkühlung der Bunde nach Verlassen der Bundbildestation (3) auf einer Kreisbahn (9) mitlaufende Isolierhauben (8) zur Abdeckung der Bunde zugeordnet.

2. Anlage nach Anspruch 1, **dadurch gekennzeichnet**, daß entsprechend einer wählbaren Vielzahl von Anpassungsmöglichkeiten am Ende der Kühlstrecke (2) ein erster Fallschacht (3a) für eine erste Bundbildestation (3) angeordnet ist.

3. Anlage nach Anspruch 1, **dadurch gekennzeichnet**, daß für einen Transport aufgefächerter Drahtwindungen über die zweite verlängerte Kühlzone (6) an deren Ende ein zweiter Fallschacht (3b) für eine Bundbildestation (3c) vorgesehen ist.

4. Anlage nach Anspruch 1, **dadurch gekennzeichnet**, daß zur wahlweisen Einstellung einer Verzögerung des Abkühlvorganges beim Walzgut die in Form von isolierten Böden, Seitenteilen und Abdeckplatten vorgesehenen Isoliermittel (7) nach Bedarf auf- bzw. zuklappbar ausgebildet sind.

## Claims

1. Plant for controlled cooling of wire from the roll heat with a succession of interacting plant parts or work stations, comprising a coiler (1) with an adjoining cooling line (2) with at least one cooling zone and a downstream coil build-up station (3) with an adjoining device (4) for discharge of the wire coils, whereby one or more of the plant parts or work stations (2 - 10) involved in the wire cooling are designed modifiably for optional adaptation to various cooling characteristics by the factory in modular construction for the attachment of booster sets and/or expansion stages, characterized in that it is designed for maximum requirements of material-compatible cooling characteristics of various wire products with a combination of expansion stages which displays a combination of the following features:
a) in a first expansion stage, a number of ventilators (5) are located below the cooling line (2) for accelerated cooling of the wire;
b) in a second expansion stage, the cooling line (2) is supplemented with a water-cooling zone (10) for extremely rapid and intensive cooling of the wire;
c) in a third expansion stage, the cooling line (2) is formed with at least one additionally attachable cooling zone (6) for delayed cooling of the wire;
d) in a fourth expansion stage, the transport facility (2, 6) between coiler (1) and coil build-up station (3) is equipped with insulated bases, side sections and cover plates (7) for strongly delayed cooling of the wire.
e) in a fifth expansion stage, the cover plates (7) are formed heatably with radiators for attainment of a foreseen wire structure through extremely delayed cooling.
f) in a sixth expansion stage, insulating caps (8) following on a circular path (9) are assigned to the transport facility (4) provided for discharge of the wire coils for a further-reaching delay in the cooling of the coils after leaving the coil build-up station (3).

2. Plant according to claim 1, characterized in that, in accordance with a selectable number of adaptation options, a first tumble shaft (3a) for a first coil build-up station (3) is located at the end of the cooling line (2).

3. Plant according to claim 1, characterized in that a second tumble shaft (3b) for a coil build-up station (3c) is provided via the second extended cooling zone (6) at its end for a transport of fanned-out wire coils.

4. Plant according to claim 1, characterized in that the insulating means (7) provided in the form of insulated bases, side sections and cover plates are foldable out and back for optional adjustment of a delay in the cooling process of the rolled material.

## Revendications

1. Installation pour le refroidissement contrôlé de fil à chaleur de laminage moyennant une succession de parties d'installation ou stations de travail fonctionnant en association, comportant un dispositif de formation de boucles (1) suivi d'un trajet de refroidissement (2) équipé d'au moins une zone de refroidissement suivie d'une station bobineuse (3) et d'une installation (4) pour le transport des bobines de fil, l'une ou plusieurs des parties d'installation ou stations de travail (2-10) participant au refroidissement du fil étant concues de façon modifiable pour l'adaptation, au choix, à différentes courbes caractéristiques de refroidissement, selon une conception modulaire destinée à l'adjonction d'ensembles auxiliaires et/ou étages supplémentaires, caractérisée en ce qu'elle est agencée de façon à répondre aux exigences maximum des courbes caractéristiques de refroidissement correspondant aux matériaux concernés des divers types de fil, en comportant une combinaison d'étages supplémentaires qui présentent la combinaison de caractéristiques suivante:
a) plusieurs ventilateurs (5) sont agencés dans un premier étage supplémentaire, en dessous du trajet de refroidissement (2), en vue du refroidissement accéléré du fil;
b) le trajet (2) est complété par une zone de refroidissement à eau (10) dans un deuxième étage supplémentaire, en vue d'un refroidissement extrèmement rapide et intensif du fil;
c) au moins une zone de refroidissement supplémentaire connectable (6) est prévue dans un troisième étage supplémentaire du trajet de refroidissement (2), pour le refroidissement retardé du fil;
d) le dispositif de transport (2,6) agencé entre le dispositif de formation de boucles (1) et la station bobineuse (3) est équipé, dans un quatrième étage supplémentaire, de fonds, parties latérales et plaques de recouvrement (7) isolés, en vue d'un refroidissement fortement retardé;
e) dans un cinquième étage supplémentaire, les plaques de recouvrement (7) sont chauffantes grâce à des radiateurs, en vue d'un refroidissement extrêmement retardé pour l'obtention d'une structure de fil déterminée;
f) dans un sixième étage supplémentaire, des capots isolants (8) circulant sur un trajet circulaire (9) et couvrant les bobines sont associés au dispositif de transport (4) destiné à l'évacuation des bobines de fil, en vue d'un retard supplémentaire du refroidissement des bobines qui quittent la station bobineuse (3).

2. Installation selon la revendication 1 caractérisée en ce qu'une première trémie de descente (3a) pour une première station bobineuse (3) est agencée à l'extrémité du trajet de refroidissement (2) selon une multitude de combinaisons sélectionnables.

3. Installation selon la revendication 1 caractérisée en ce qu'une deuxième trémie de descente (3b) pour une station bobineuse (3c) est agencée à l'extrémité de la deuxième zone de refroidissement prolongée (6), pour permettre le transport de boucles de fil étalées en éventail sur celle-ci.

4. Installation selon la revendication 1 caractérisée en ce que les moyens isolants (7) sous forme de fonds, parties latérales et plaques de recouvrement isolés sont conçues de façon relevable ou rabattable, en vue d'un réglage au choix du retard du refroidissement du produit laminé.
